**Europäisches Patentamt**

**European Patent Office**

**Office européen des brevets**

(11) Publication number: **0 109 779**
**B1**

(12) **EUROPEAN PATENT SPECIFICATION**

(45) Date of publication of patent specification: **17.12.86**

(21) Application number: **83306484.3**

(22) Date of filing: **25.10.83**

(51) Int. Cl.⁴: **C 08 F 210/16**

(54) Ethylene copolymer.

(30) Priority: **25.10.82 JP 186043/82**

(43) Date of publication of application:
**30.05.84 Bulletin 84/22**

(45) Publication of the grant of the patent:
**17.12.86 Bulletin 86/51**

(84) Designated Contracting States:
**AT DE FR GB IT NL**

(56) References cited:
**FR-A-2 378 804**
**GB-A-2 034 723**
**GB-A-2 093 047**
**GB-A-2 114 584**
**US-A-4 071 674**

(73) Proprietor: **MITSUI PETROCHEMICAL INDUSTRIES, LTD.**
**2-5, Kasumigaseki 3-chome Chiyoda-ku Tokyo 100 (JP)**

(72) Inventor: **Kohyama, Masaki**
**2-5 Misono 1-chome**
**Ohtake-shi Hiroshima-ken (JP)**
Inventor: **Motooka, Masanori**
**2 Muronoki-cho 1-chome**
**Iwakuni-shi Yamaguchi-ken (JP)**
Inventor: **Ueda, Takashi**
**2-13 Misono 2-chome**
**Ohtake-shi Hiroshima-ken (JP)**

(74) Representative: **Myerscough, Philip Boyd et al**
**J.A.Kemp & Co. 14, South Square Gray's Inn London, WC1R 5EU (GB)**

Courier Press, Leamington Spa, England.

**Description**

This invention relates to ethylene/$C_4$—$C_{20}$ α-olefin copolymers which have new characteristics in composition distribution, degree of branching, randomness and crystallinity by DSC melting point and are not described in the prior literature. These copolymers have excellent transparency, impact strength, tear strength, blocking resistance, environmental stress cracking resistance, heat resistance and low-temperature heat sealability.

More specifically, this invention relates to an ethylene copolymer having the following characteristics (A) to (I).

(A) It has a melt flow rate of from 0.01 to 200 g/10 min.

(B) It has a density of from 0.900 to 0.945 g/cm$^3$.

(C) It has a composition distribution parameter (U), defined by the following equation (1)

$$U = 100 \times (Cw/Cn - 1) \qquad \qquad .... (1)$$

wherein Cw is the weight average degree of branching, and Cn is the number average degree of branching, of not more than 50.

(D) The amount of components having a degree of branching of not more than 2/1000 carbons is 15% by weight based on the ethylene copolymer.

(E) The amount of components having a degree of branching of at least 30/1000 carbons is not more than 15% by weight based on the ethylene copolymer.

(F) The average chain length ratio of the methylene groups is not more than 2.0.

(G) It has $n$ melting points measured by a differential scanning calorimeter (DSC) (where n≥2). The highest melting point ($T_1$) among these DSC melting points is given by the following equation

$$T_1 = (175 \times d - 46)°C \sim 126\ °C$$

wherein d is the density (g/cm$^3$) of the copolymer, and the difference between $T_1$ and the lowest melting point ($T_n$) among the DSC melting point is given by

$$0°C < T_1 - T_2 \leqq 18°C$$

and the difference between $T_1$ and the second highest melting point $T_2$ is given by

$$0°C < T_1 - T_2 \leqq 5°C,$$

provided that when there are two (n=2) DSC melting points, the difference is in accordance with the above expression $0°C < T_1 - Tη \leqq 18°C$.

(H) The ratio of the amount of heat of crystal fusion ($H_1$) at the highest melting point ($T_1$) to the total amount of heat of crystal fusion ($H_T$) is given by

$$O < H_1/H_T \leqq 0.40.$$

(I) The ethylene copolymer is a copolymer of ethylene with at least one $C_4$—$C_{20}$ α-olefin.

According to one preferred embodiment of this invention, the ethylene copolymer further has the following characteristic (J).

(J) It has an n-decane-soluble content at 23°C of not more than 5% by weight.

According to another embodiment, there can be provided an ethylene copolymer having a highest DSC melting point ($T_1$) of $T_1 = (175 \times d - 43)°C \sim 125°C$.

Low-density polyethylene (to be sometimes abbreviated as HP—LDPE) obtained by the high-pressure process has been extensively used as films, hollow containers, injection-molded articles, pipes, steel pipe coatings, cable and wire coatings, foamed articles, etc. because of its pliability and relatively good transparency. However, since HP—LDPE has poor impact strength, tear strength and environmental stress cracking resistance (to be sometimes abbreviated as ESCR), it is not suitable for use in fields which require materials which are excellent in these properties and have the aforesaid good properties in a well balanced combination.

On the other hand, low-density polyethylenes (to be sometimes abbreviated as L—LDPE) obtained by copolymerizing ethylene with α-olefins having at least 3 carbon atoms under medium to low pressure conditions have better mechanical strength, ESCR and transparency than HP—LDPE, and therefore attract interest as a substitute of HP—LDPE in some applications. But the mechanical strength and optical properties of L—LDPE are still required to be improved, and it still does not have satisfactory heat sealability. Hence, L—LDPE cannot meet the recent requirement for high strength which arises from the highes speeds of packaging machines such as bag-making machines and filling and packing machines or the reduced thickness of packing materials. It has therefore been desired to develop materials which are

2

excellent in these properties and at the same time have the inherent good properties mentioned above in a well balanced combination.

An ethylene copolymer meeting this requirement is disclosed in U.S. Patent No. 4,205,021 (corresponding to Japanese Laid-Open Patent Publication No. 92887/1978). Investigations of the present inventors, however, found that the ethylene copolymer specifically disclosed in this patent has a somewhat broad composition distribution and contains an unnegligible amount of components having low crystallinity and therefore does not have fully satisfactory composition distribution characteristics, and its blocking resistance is still desired to be improved.

British Patent No. 2,093,047 pertains to an improvement in the blocking resistance of an ethylene copolymer. The ethylene copolymer disclosed there has a single DSC melting point, and its heat resistance and low-temperature heat sealability are not well balanced. It has been found that an attempt to improve low-temperature heat sealability results in reduced heat resistance, and an attempt to improve heat resistance, on the other hand, ends in deteriorating low-temperature heat-sealability.

British Patent No. 2,093,044 proposes an ethylene/α-olefin copolymer having a specified long chain branching index and a specified short chain branching distribution. Because this copolymer has a broad composition distribution, its composition distribution characteristics are not satisfactory. Its transparency and impact strength are also unsatisfactory. Hence, this copolymer cannot provide a material having excellent properties in a well balanced combination.

U.S. Patent No. 3,645,992 discloses a continuous process for producing a uniform, random, partially crystalline ethylene/α-olefin copolymer having a narrow distribution of molecular weight by using a vanadium-type catalyst. This ethylene copolymer also has a single DSC melting point, and cannot have heat resistance and low-temperature heat sealability in a well balanced combination.

The present inventors have extensively worked on the development of an ethylene copolymer which has excellent mechanical properties, optical properties, blocking resistance heat resistance, and low-temperature heat sealability in a well balanced combination.

First, they discovered that in an ethylene copolymer, particularly a copolymer of ethylene with a $C_4$—$C_{20}$ α-olefin, the combination of parameters of composition distribution characteristics, the degree of branching, randomness and DSC melting point is an important factor for imparting the aforesaid excellent properties and maintaining a good balance among them.

Further work based on this new finding has finally led to the discovery that an ethylene/$C_4$—$C_{20}$ α-olefin copolymer having the characteristics (A) to (H) mentioned above can be produced, and it is an ethylene copolymer which is not described in the prior literature and has excellent transparency, impact strength, tear strength, blocking resistance, environmental stress cracking resistance, heat resistance and low-temperature heat sealability in a well balanced combination.

It is an object of this invention therefore to provide a new type of ethylene copolymers.

The above and other objects and advantages of this invention will become apparent from the following description.

The ethylene copolymer of this invention is defined by the characteristics (A) to (I) which will be described below in detail.

The ethylene copolymer of this invention has a melt flow rate (MFR) of from 0.01 to 200 g/10 min., preferably from 0.05 to 150 g/10 min. [characteristic (A)].

The MFR is measured in accordance with ASTM D1238E. If the MFR exceeds 200 g/10 min., the ethylene copolymer has poor moldability and mechanical strength. If it is less than 0.01 g/10 min., its moldability is also deteriorated undesirably.

The ethylene copolymer of this invention has a density of from 0.900 to 0.945 $g/cm^3$, preferably 0.910 to 0.940 $g/cm^3$ [characteristic (B)].

The density is measured in accordance with ASTM D1505. If the density exceeds 0.945, the transparency, tear strength, impact strength and low-temperature heat sealability of the copolymer are deteriorated, and if it is less than 0.900 $g/cm^3$, the antiblocking property of the copolymer becomes poor.

The ethylene copolymer of this invention has a composition distribution parameter (U), defined by the following equation

$$U = 100 \times (Cw/Cn - 1) \qquad \qquad \ldots \ldots (1)$$

wherein Cw represents a weight average degree of branching and Cn represents a number average degree of branching, of not more than 50, for example $0 < U \leqq 50$, preferably not more than 40, more preferably not more than 30 [characteristic (C)].

U is a parameter showing the distribution of components of the copolymer which is irrelevant to its molecular weight. As the characteristics (D), (E), (F), (G), etc. to be described below, it is an important characteristic which specifies the structure of the copolymer of this invention. If U exceeds 50, the composition distribution of the copolymer is too broad, and the copolymer has poor transparency, tear strength, impact strength, blocking resistance and low-temperature heat sealability. Hence, it is difficult to provide the desired excellent properties in a well balanced combination.

Cw and Cn used in equation (1) for calculating U are determined by the following method.

The copolymer (10 g) is added to about 2 liters of a mixture of p-xylene and butyl cellosolve (80:20 by volume) and the mixture is heated at about 130°C in the presence of 2,5-di-tert.butyl-4-methylphenol (0.1% by weight based on copolymer) as a heat stabilizer. Then, about 1 kg of diatomaceous earth (tradename Celite #560, made by Johns-Manville Company, U.S.A.) was added to the resulting solution, and the mixture was cooled to room temperature with stirring. This operation results in coating the copolymer on diatomaceous earth. Then, the entire mixture is filled in a jacketed cylindrical column (diameter about 3 cm) which is set perpendicularly. While the column is maintained at a temperature of 30°C, a solvent having the same composition as the above mixed solvent in the same volume as a solution flowing from the bottom of the column is passed (about 1 litre/hr) through the column from its top. The solution flowing out from the bottom of the column is collected in a receiver. To the collected solution is added methanol in an amount twice the volume of the collected solution to precipitate the eluted copolymer. After confirming that upon addition of methanol, the copolymer no longer precipitates, the flowing of the solution is stopped. The temperature of the column is then raised to 35°C, and the flowing of the solution and the passing of the mixed solvent are resumed and continued until the copolymer no longer flows out. The foregoing operation is carried out at intervals of 5°C until the operation is finally carried out at 120°C. The copolymer fractions precipitated from methanol are separated by filtration and dried to obtain fractions.

The weight of each of the fractions is then measured, and the degree of branching per 1000 carbons [C] of each of the fractions is determined by the $^{13}$C—NMR method shown below with regard to the characteristic (D).

Since the degree of branching per 1000 carbons [C] of the fraction decreases as the eluting temperature rises, the cumulative weight fractions [I(ω)] are calculated in the decreasing order of eluting temperature. Under the assumption that the number of branches per 1000 carbons [C] and the cumulative weight fraction [I(ω)] in each fractionated portion follow the logarithmic normal distribution of the following equation (2), parameters β and $C_o$ equation (2) are determined by using the method of least square.

$$I(W) = \frac{1}{\beta\sqrt{\pi}} \int_o^C \exp\left[\frac{1}{\beta^2}(\ln C/C_o)^2\right] d(\ln C) \tag{2}$$

β and $C_o$ are given by the following equations.

$$\beta^2 = 2 \ln(Cw/Cn) \tag{3}$$

$$C_o^2 = Cw \cdot Cn \tag{4}$$

Thus, Cn and Cw can be easily calculated.

The amount of components having a degree of branching of not more than 2/1000 carbons (not more than 2 branches per 1000 carbons of the main chain of the copolymer) is not more than 15% by weight, for example 15 to 0% by weight, preferably not more than 10% by weight, more preferably not more than 7% by weight [characteristic (D)].

The characteristic (D) is a parameter which means that the amount of components which have too small degree of branches bonded to the main chain of the copolymer is small. As the composition distribution parameter (C), it is an important characteristic which together with the composition distribution parameter (U), specifies the structure of the ethylene copolymer of this invention. If the copolymer contains more than 15% by weight of components having a degree of branching of not more than 2/1000 C, it has poor transparency, tear strength, impact strength, and low-temperature heat sealability, and it is difficult to provide the desired excellent properties in a well balanced combination.

The degree of branching, as used herein, denotes the number of branches per 1000 carbons in the copolymer chain, and is determined in accordance with the method disclosed in G. J. Ray, P. E. Johnson and J. R. Knox, Macromolecules, 10, 773 (1977) from the area intensity of a signal of methylenic carbon adjacent to a branch observed by the $^{13}$C—NMR spectrum. For example, when the comonomers are a copolymer of butene-1 and 4-methylpentene-1, the positions of the chemical shifts of the signals assigned to the above methylenic carbons are respectively 33.8 ppm and 34.5 ppm with TMS (tetramethylsilane) as a standard.

In the ethylene copolymer of this invention, the amount of components having a degree of branching of at least 30/1000 carbons is not more than 15% by weight, for example 15 to 0% by weight, preferably not more than 13% by weight, more preferably not more than 7% by weight. [characteristic (E)].

The characteristic (E) is a parameter which means that the amount of components having a main chain structure in which the number of branches bonded to the main chain of the copolymer is too large is small. As the composition distribution parameter (C) and the branching degree condition (D), it is an important characteristic which together with the composition distribution parameter U and the branching degree condition (C), specifies the structure of the copolymer of this invention. If the amount of components having at least 30 branches/1000 C exceeds 15% by weight, the copolymer has deteriorated antiblocking property and tends to soil an object with which it makes contact.

The amounts of components having not more than 2 branches/1000 carbons and components having

4

at least 30 branches/1000 carbons are determined as follows:— The relation between the cumulative weight fractions and the degrees of branching obtained from the fractionation of the copolymer performed in determining U with regard to the characteristic (C) is plotted on a graph, and the points corresponding to two branches/1000 C and 30 branches/1000 C on the graph are interpolated, and the cumulative weight fractions corresponding to these points are determined based on the results, the above amounts can be determined.

In the ethylene copolymer of this invention, the average chain length ratio of methylene groups is not more than 2.0, for example 2.0 to 1.0, preferably 1.7 to 1.0, more preferably 1.5 to 1.0 [characteristic (F)].

The average chain length ratio in characteristic (F) is a parameter which shows the random structure of ethylene and the α-olefin in the molecular chains of the copolymer, and is one of the important characteristics which together with the characteristics (C) to (E), specifies the structure of the ethylene copolymer of this invention. If the average chain length ratio of methylene groups exceeds 2.0, the copolymer has inferior transparency, tear strength, impact strength, blocking resistance and low-temperature heat-sealability, and it is difficult to provide the desired excellent properties in a well balanced combination.

In the present invention, the average chain length ratio of methylene groups in characteristic (F) is determined from the average methylene chain length calculated by using $^{13}$C—NMR and the average block methylene chain length calculated by excluding the case where the number of methylene groups between two adjacent branches is not more than 6, and defined as the ratio of the average block methylene chain length to the average methylene chain length. The block methylene chain length is the number of methylene groups between branches determined from the signals of the third and fourth and subsequent methylenic carbons observed when the number of methylene groups between branches is at least 7. The positions of the chemical shifts of the signals assigned to the third and fourth and subsequent methylenes are 30.1 ppm and 29.6 ppm, respectively, with TMS as a standard.

The ethylene copolymer of this invention has $n(n \geqq 2)$ melting points measured by a differential scanning calorimeter (DSC), and the highest melting point ($T_1$) among these DSC melting points is defined by

$T_1 = (175 \times d - 46)°C \sim 125°C$,
preferably $(175 \times d - 43)°C \sim 125°C$,
more preferably $(175 \times d - 42.5)°C \sim 123°C$

wherein d is the density (g/cm$^3$) of the copolymer, and the difference between $T_1$ and the lowest melting point ($T_n$) among the DSC melting points is defined by

$0°C < T_1 - T_n \leqq 18°C$, preferably
$1°C \leqq T_1 - T_n \leqq 16°C$

and the difference between $T_1$ and the second highest melting point ($T_2$) is defined by

$0°C < T_1 - T_2 \leqq 5°C$, preferably
$0.1°C < T_1 - T_2 \leqq 4°C$,

provided that when there are only two (n=2) DSC melting points, $0°C < T_1 - T_2 \leqq 18°C$, preferably $1°C \leqq T_1 - T_2 \leqq 16°C$.

The above DSC melting points and their relation are a parameter which together with the characteristic (H) described below, has to do with the crystallinity characteristics of the ethylene copolymer of this invention. This parameter is one of the important characteristics which together with the characteristics already described above, specifies the structure of the copolymer of this invention. If $T_1$ in the characteristic (G) is less than $(175 \times d - 46)°C$ (d is as defined above), the copolymer has reduced heat resistance. If $T_1$ is higher than 125°C, the transparency and low-temperature heat sealability of the copolymer are inferior. When $T_1 - T_n$ is higher than 18°C or $T_1 - T_2$ exceeds 5°C, the tear strength, impact strength and low-temperature heat sealability of the copolymer are deteriorated, and it is difficult to provide the desired excellent properties in a well balanced combination.

In the present invention, the DSC melting points in characteristic (G) and the amount of heat of crystal fusion ($H_1$) and the amount of heat of crystal fusion ($H_T$) are measured and determined by the following methods.

Using a differential scanning calorimeter, 3 mg of a sample is melted at 200°C for 5 minutes. Then, the temperature is lowered to 20°C at a rate of 10°C/min. The sample is then maintained at this temperature for 1 minute, and again heated to 150°C at a rate of 10°C/min. Thus, a DSC endothermic curve is obtained.

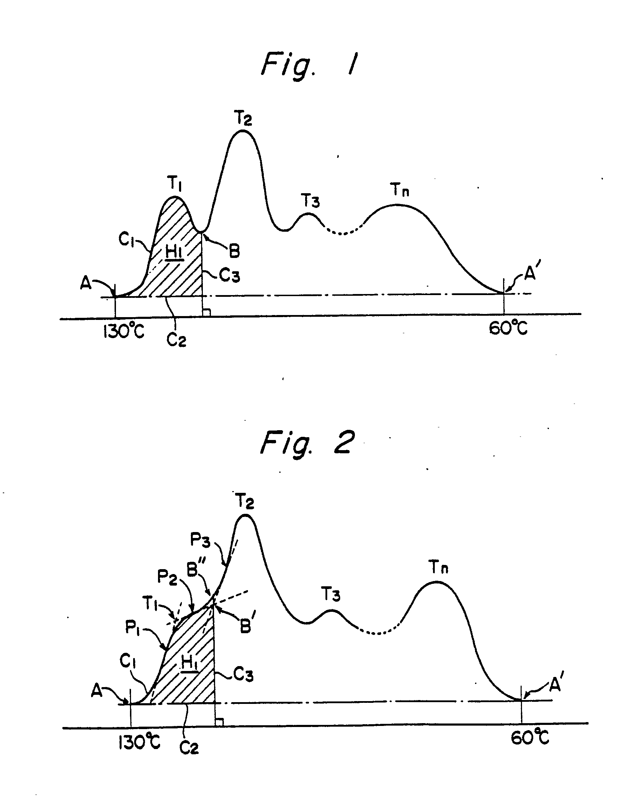

Figures 1 and 2 accompanying this application are charts showing examples of DSC endothermic curves of the ethylene copolymers of this invention.

Among the endothermic peaks in the DSC endothermic curve, $T_1$ in Figure 1 appearing as a peak on the highest temperature side or as a shoulder or $T_1$ in Figure 2 (the intersecting point of tangential lines drawn at the deflection point $P_1$ on the high temperature side of the shoulder and the deflection point $P_2$ on the low temperature side of the shoulder) is the highest melting point ($T_1$). As shown in Figures 1 and 2, a plurality of DSC points are designated as $T_1, T_2, \ldots T_n$ from the high temperature side to the low temperature side. $T_2$ is thus the second highest melting point, and $T_n$ is the lowest melting point.

On the other hand, as shown in Figures 1 and 2, the amount of heat of a portion defined by the straight line connecting the points at 60°C and 130°C of the endothermic curve (the base line A—A′ in the drawings) and the endothermic curve between them is defined as the total amount of heat of crystal fusion ($H_T$).

5

Furthermore, as shown in Figure 1, when the highest melting point ($T_1$) appears as a peak, a perpendicular $C_3$ is drawn from the minimum point B of the curve immediately on the low temperature side of $T_1$ to the temperature axis of co-ordinates, and the amount of heat of the hatched portion defined by the perpendicular $C_3$, the base line A—A' (the portion $C_2$ in the drawing) and the endothermic curve (the curve portion $C_1$ between A and B in the drawing) is defined as the amount of heat of crystal fusion ($H_1$) at the highest melting point ($T_1$). When the highest melting point ($T_1$) appears as a shoulder as shown in Figure 2, a perpendicular $C_3$ is drawn from the intersecting point B' of tangential lines drawn at the deflection point $P_2$ immediately on the low temperature side of the shoulder and the deflection point $P_3$ on the high temperature side of $T_2$ to the temperature axis of coordinates, and the amount of heat of the hatched portion defined by the perpendicular $C_3$, the base line A—A' (the portion $C_2$ in the drawing) and the endothermic curve (the curve portion $C_1$ between A and the intersection B" of the curve and the extension of $C_3$) is defined as the amount of heat of crystal fusion ($H_1$) at the highest melting point ($T_1$).

In the ethylene copolymer of this invention, the ratio of the amount of heat of crystal fusion ($H_1$ as defined above) at the highest melting point ($T_1$) among the DSC melting points ($n$ melting points; $n \geqq 3$) to the total amount of heat of crystal fusion ($H_T$ as defined above) is $0 < H_1 < T_T \leqq 0.40$, preferably $0.01 \leqq H_1/T_T \leqq 0.35$ [characteristic (H)].

The ratio of the amounts of heat of fusion, $H_1/T_T$, in the characteristic (H) is related to the crystallinity characteristics by DSC melting points of the ethylene copolymer of this invention together with the characteristic (G). If the $H_1/H_T$ ratio exceeds 0.40, the tear strength, impact strength and low-temperature heat sealability of the copolymer are deteriorated. In combination with the other characteristics, this characteristic (H) serves to provide the desired excellent properties of the copolymer of this invention in a well balanced combination.

The ethylene copolymer of this invention is a copolymer of ethylene with an α-olefin having 4 to 20 carbon atoms, preferably 6 to 18 carbon atoms. At least one α-olefin may be used. Examples of the α-olefin are 1-butene, 1-pentene, 1-hexene, 4-methyl-1-pentene, 1-heptene, 1-octene, 1-decene, 1-tetradecene, 1-octadecene, and mixtures of these. When propylene, i.e. $C_3$ α-olefin, is used, the resulting copolymer has poor tear strength, impact strength and environmental stress cracking resistance.

In a preferred embodiment of this invention, the ethylene copolymer of this invention additionally has the following characteristic (J).

(J) The copolymer has an n-decane-soluble content at 23°C of not more than 8% by weight, for example 8 to 0% by weight, preferably not more than 5% by weight, more preferably not more than 3% by weight, especially preferably not more than 2% by weight.

The copolymer of this invention which additionally has the characteristic (J) has higher blocking resistance and is not likely to soil an object with which it makes contact.

The n-decane-soluble content is determined as follows:—

Ten grams of the ethylene copolymer is 1 liter of dissolved in n-decane in the presence of 2,5-tert. butyl-4-methyl-phenol as a heat stabilizer. The solution is maintained at 130°C for 1 hour, and then cooled to 23°C at a rate of 1°C/min. The weight of the ethylene copolymer which precipitates at this time is measured and subtracted from 10 g. The weight percent of the balance to 10 g, the original weight of the sample, is defined as the n-decane-soluble content.

The copolymer of this invention can be produced, for example, by copolymerizing ethylene with at least one $C_4$—$C_{20}$ α-olefin in the presence of a catalyst composition composed of

(a) a titanium component containing titanium, magnesium and halogen as essential ingredients and obtained by treating (a-1) a highly active solid component having a specific surface area of at least 50 m²/g with (a-2) an alcohol,

(b) an organoaluminum compound component, and

(c) a halogen compound component,

so that a copolymer having the aforesaid characteristics is formed (when a part or the whole of the component (b) of the catalyst composition is an organoaluminum compound containing halogen, the component (c) can be omitted).

The highly active solid component (a-1) is a component which can by itself be used as a highly active titanium catalyst component, and is well known. Basically, the component (a-1) can be obtained by reacting a magnesium compound and a titanium compound with or without an auxiliary reagent so as to obtain a solid component having a high specific surface area. The solid component (a-1) has a specific surface area of at least about 50 m²/g, for example about 50 to about 1000 m²/g, and preferably about 80 to about 900 m²/g. Generally, the solid component (a-1) contains about 0.2 to about 18% by weight, preferably about 0.3 to about 15% by weight, of titanium, and has a halogen/titanium atomic ratio of from about 4 to about 300, preferably from about 5 to about 200, and a magnesium/titanium atomic ratio of from about 1.8 to about 200, preferably from about 2 to about 120.

The component (a-1) may contain other elements, metals, functional groups, electron donors, etc. in addition to the essential ingredients. For example, aluminum and silicon may be used as the other elements and metals. Examples of the functional groups are alkoxy and aryloxy groups. Examples of the electron donors are ethers, carboxylic acids, esters and ketones. One preferred example of the method of producing the solid component (a-1) is a method which comprises treating a complex of a magnesium halide and an alcohol with an organic metal compound, for example an organoaluminum compound such as a trialkylaluminum or an alkyl aluminum halide, and reacting the treated product with a titanium compound. The details of this method are described in the specification of U.S. Patent No. 4,071,674, for example.

The alcohol (a-2) used to treat the highly active solid component (a-1) may be an aliphatic, alicyclic or aromatic alcohol which may have a substituent such as an alkoxy group. Specific examples of the alcohol are methanol, ethanol, n-propanol, iso-propanol, tert-butanol, n-hexanol, n-octanol, 2-ethylhexanol, n-decanol, oleyl alcohol, cyclopentanol, cyclohexanol, benzyl alcohol, isopropylbenzyl alcohol, cumyl alcohol and methoxyethanol. Aliphatic alcohols having 1 to 18 carbon atoms are especially preferred.

Treatment with the alcohol is preferably carried out in an inert hydrocarbon such as hexane and heptane. For example, it is preferred to suspend the solid component (a-1) in the inert hydrocarbon to a concentration of 0.005 to 0.2 mole/liter, especially 0.01 to 0.1 mole/liter, and to contact it with the alcohol in an amount of 1 to 50 moles, especially 2 to 30 moles, per titanium atom in the solid component (a-1). The reaction conditions can be properly selected depending upon the kind of the alcohol. For example, the reaction can be carried out at a temperature of about −20 to about +150°C, preferably about −10 to about +100°C, for several minutes to about 10 hours, preferably about 10 minutes to about 5 hours. As a result of the alcohol treatment, the alcohol (a-2) is taken in the form of an alcohol and/or alkoxy group in the solid component (a-1). Preferably, the amount of the alcohol (a-2) so taken into the component (a-1) is 4 to 100 moles, especially 6 to 50 moles, per titanium atom. By this reaction, a part of titanium is sometimes liberated from the solid component (a-1). When such a solvent-soluble component exists, the resulting titanium catalyst component is preferably well washed with an inert solvent after the reaction, and then used for the polymerization.

The organoaluminum compound component (b) to be used together with the titanium component (a) is typically a compound of the general formula $R_nAlX_{3-n}$ (wherein R represents a hydrocarbon group, for example a $C_1$—$C_{15}$ alkyl group or a $C_2$—$C_8$ alkenyl group, X represents a halogen atom, and $0 < n \leqq 3$). Specific examples include trialkyl aluminums such as triethyl aluminum and triisobutyl aluminum; dialkyl aluminum halides such as diethyl aluminum chloride and diisobutyl aluminum chloride; alkyl aluminum sesquihalides such as ethyl aluminum sesquichloride and ethyl aluminum sesquibromide; and alkyl aluminum dichloride such as ethyl aluminum dichloride. When the halogen compound component (c) is not used, it is desirable to use the component (b) so that in its general formula, n is preferably 1.5 to 2.0, more preferably from 1.5 to 1.8 as an average composition.

The halogen compound component (c) is, for example, a halogenated hydrocarbon such as ethyl chloride or isopropyl chloride, or silicon tetrachloride which can act as a halogenating agent for the component (b). When the component (c) is used, its amount is preferably such that the total amount of the halogens in the components (b) and (c) is from 0.5 to 2 atoms, particularly from 1 to 1.5 atoms, per aluminum atom in the component (b).

The copolymerization of ethylene with the $C_4$—$C_{20}$ α-olefin can be carried out in the liquid or vapor phase in the presence of the catalyst composition composed of components (a), (b) and (c) described above in the presence or absence of an inert diluent such as an inert hydrocarbon at a temperature of, for example, 0 to about 300°C. In particular, the desired ethylene copolymer can be easily obtained by performing the copolymerization in the presence of an inert hydrocarbon under conditions in which the resulting ethylene copolymer dissolves, at a temperature of, for example, about 120 to 300°C, preferably about 130 to 250°C. The ratio between ethylene and the $C_4$—$C_{20}$ α-olefin can be properly selected. Preferably they are used in such proportions that the mole ratio of ethylene/$c_4$—$C_{20}$ α-olefin in the resulting ethylene copolymer becomes about 99:1 to 90:10.

In performing the copolymerization, the amount of the titanium catalyst component (a) used is, for example, about 0.0005 to about 1 millimole/liter, preferably about 0.001 to about 0.1 mole/liter, calculated as titanium atom. The amount of the organoaluminum compound (b) is that which serves to maintain polymerization activity. Desirably, it is used so that the Al/Ti atomic ratio becomes from about 1 to about 2,000, preferably from about 10 to about 500. The polymerization pressure is generally atmospheric pressure to about 100 kg/cm², especially about 2 to about 50 kg/cm².

The ethylene copolymers of this invention have better transparency, impact strength, tear strength, blocking resistance, low-temperature heat sealability, heat resistance and ESCR than not only HP—LDPE but also conventional L—LDPE, and retain these excellent properties in a well balanced combination. Accordingly, they are especially suitable for use as packaging films. These copolymers can be processed into various articles such as films, containers, pipes, tubes and household goods by various molding methods such as T-die molding, inflation film molding, blow molding, injection molding and extrusion. Various types of composite films can be formed by extrusion coating on other films or by co-extrusion. They can also be used as steel pipe coatings, cable coatings or foamed articles. The copolymers of this invention may be used as blends with other thermoplastic resins, for example polyolefins such as HP—LDPE, medium-density polyethylene, high-density polyethylene, polypropylene, poly-1-butene, poly-4-methyl-1-pentene, ethylene/propylene or 1-butene copolymers which have low crystallinity or are amorphous, and propylene/1-butene copolymer. It is also possible to incorporate petroleum resins, waxes, heat stabilizers, weather stabilizers, antistatic agents, antiblocking agents, slip agents, nucleating agents, pigments, dyes, inorganic or organic fillers, synthetic rubbers, natural rubbers, etc. into the copolymers of this invention.

The following Examples illustrate the copolymers of this invention in greater detail.

### Example 1

**Preparation of catalyst**

In a nitrogen atmosphere, 1 mole of commercial anhydrous magnesium chloride was suspended in 2 ml of hexane dehydrated and purified. With stirring, 6 moles of ethanol was added dropwise over the course of 1 hour, and the reaction was carried out for 1 hour at room temperature. To the reaction mixture was added dropwise at room temperature 2.6 moles of diethyl aluminum chloride, and the mixture was stirred for 2 hours. Then, 6 moles of titanium tetrachloride was added, and the mixture was heated to 80°C. At this temperature, the mixture was stirred for 3 hours to perform the reaction. After the reaction, the solid portion was separated and repeatedly washed with refined hexane. The resulting solid component (A—1) had the following composition.

| Ti | Cl | Mg | Al | OEt*) | (wt.%) |
|-----|------|------|-----|-------|--------|
| 3.7 | 67.0 | 20.0 | 0.4 | 4.8 | |

Ethanol (50 millimoles) was added at room temperature to 50 millimoles, at Ti, of the component (A—1) suspended in refined hexane. The temperature was raised to 50°C, and they were reacted at this temperature for 1.5 hours. After the reaction, the solid portion was repeatedly washed with refined hexane. The resulting catalyst component (B—1) has the following composition.

| Ti | Cl | Mg | Al | OEt*) | (wt.%) |
|-----|------|------|-----|-------|--------|
| 1.2 | 53.0 | 16.0 | 0.1 | 22.6 | |

**Polymerization**

A 200-liter continuous polymerization reactor was continuously charged with 100 liters/hr of dehydrated and refined hexane, 7 millimoles/hr of diethyl aluminum chloride, 14 millimoles/hr of ethyl aluminum sesquichloride, and 0.6 millimole/hr, as Ti, of the catalyst component (A—1) prepared as above. Ethylene (13 kg/hr), 4-methyl-1-pentene (19 kg/hr) and hydrogen (45 liters/hr) were simultaneously fed continuously into the polymerization vessel, and the monomers were copolymerized at a polymerization temperature of 165°C and a total pressure of 30 kg/cm² for a residence time of 1 hour under such conditions that the concentration of the copolymer in the hexane solvent was maintained at 130 g/liter. The catalytic activity corresponded to 21,700 g of copolymer/mmole of Ti.

The results are shown in Table 2.

The resulting copolymer was formed into a film having a width of 350 mm and a thickness of 30 μ by a commercial tubular film forming machine (made by Modern Machinery Company) for high-pressure polyethylene. The molding conditions were as follows:—

Resin temperature: 180°C
Rotating speed of the screw: 100 rpm
Diameter of the die: 100 mm
Die slit width: 0.7 mm

The film was evaluated by the following methods.

Haze (%): Measured in accordance with ASTM D1003

Impact strength (Kg-cm/cm):

Measured by a film impact tester made by Toyo Seiki Co., Ltd. The spherical surface of the impact head had a diameter of 1".

Elmendorf tear strength (kg/cm): Measured in accordance with ASTM D1922

Blocking value (g): Measured substantially in accordance with ASTM D1893. The peeling bar was made of glass, and the peeling speed was adjusted to 20 cm/min.

Heat seal starting temperature (°C): Using a heat sealer made by Toyo Tester Co., Ltd., two films are heat-sealed over a 1 cm width at a given temperature (to be referred to as the heat seal temperature) under a pressure of 2 kg/cm² for a sealing time of 1 second. From the two films integrated by heat sealing, a rectangular test sample having a width of 15 mm and a length of 60 mm is cut out. One short side of the test sample is heat-sealed, and the other short side remains open. By using a tensile tester, the two open ends of the test sample are clamped by an air chuck and pulled at a pulling speed of 300 mm/min. at room temperature to perform a pelling test. At this time, the sample is observed to determine whether the breakage is due to peeling or occurs at parts other than the heat-sealed surface.

The above operation is repeated at varying heat sealing temperatures, and the heat seal temperature at

*) The resulting solid was decomposed and extracted with $H_2O$-acetone and quantitatively determined as ethanol by gas chromatography.

which the breakage begins to occur at the parts other than the heat seal temperature is defined as the heat seal starting temperature

The results are shown in Table 3.

### Examples 2 to 7

By using the same polymerization vessel and catalyst component (B—1) as used in Example 1, continuous copolymerization was carried out by using varying kinds of the organoaluminum compound component and the α-olefin. The polymerization conditions are shown in Table 1, and the properties of the copolymers and the films are shown in Tables 2 and 3.

### Comparative Example 1

Continuous copolymerization was carried out in the same way as in Example 1 except that the component (A—1) before reaction with ethanol was used as the Ti catalyst component instead of the component (B—1). The catalytic activity was 19,100 g of copolymer/mmole of Ti. The properties of the copolymer are shown in Table 3. The copolymer obtained in this example had insufficient blocking resistance because its composition distribution was somewhat broad and it contained components having high crystallinity and low crystallinity.

### Comparative Example 2

In the same polymerization as in Example 1, 20 mmoles/hr of triethyl aluminum as the organoaluminum compound component, 0.42 mmoles/hr as Ti atom of the component (A—1) before reaction with ethanol used as the Ti catalyst component instead of the component (B—1), 13 kg/hr of ethylene, 40 liters/hr of hydrogen and 30 kg/hr of 4-methyl-1-pentene were continuously fed into the vessel, and the monomers were copolymerized. The catalytic activity corresponded to 31,000 g of the copolymer/mmole of Ti.

The various properties of the copolymer are shown in Table 3.

The copolymer obtained in this example had inferior transparency, blocking resistance and low-temperature heat sealability because its composition distribution was considerably broad and it contained much components having high crystallinity and low crystallinity.

### Comparative Example 3

Hexane dehydrated and purified (0.8 liter) and 0.2 liter of 4-methyl-1-pentene was fed into a 2-liter autoclave. After the inside of the autoclave was fully purged with nitrogen, 2.0 millimoles of triethyl aluminum and 0.02 millimole calculated as Ti atom of the Ti catalyst used in Comparative Examples 1 and 2 were added. Then, hydrogen under 0.6 kg/cm$^2$ was introduced, and the pressure was elevated with ethylene (2.5 kg/cm$^2$). The monomers were copolymerized at a polymerization temperature of 70°C for 2 hours to give 295 g of a copolymer. The catalytic activity corresponded to 14,800 g of the copolymer/mmole of Ti.

The properties of the resulting copolymer are shown in Table 3.

The copolymer obtained in this example had poor low-temperature heat sealability because its composition distribution was very broad, and it shows a single melting point at 124.5°C.

### TABLE 1

| Example | Ti(A—1) (mmol/hr) | Promoter component | | α-Olefin | | H$_2$ (l/hr) | Catalytic activity (g-copolymer/mmol-Ti) |
| | | Kind | Amount (mmol/hr) | Kind | Amount (kg/hr) | | |
|---|---|---|---|---|---|---|---|
| 2 | 0.80 | Et$_{1.5}$AlCl$_{1.5}$ | 25 | 4-Methyl-1-pentene | 13 | 70 | 16,300 |
| 3 | 0.70 | { Et$_2$AlCl | 6 } | " | 17 | 70 | 18,600 |
| | | Et$_{1.5}$AlCl$_{1.5}$ | 18 | | | | |
| 4 | 0.70 | { Et$_3$Al | 25 } | " | 15 | 60 | 18,600 |
| | | SiCl$_4$ | 7.5 | | | | |
| 5 | 0.65 | { i-BU$_3$Al | 25 } | " | 20 | 50 | 20,000 |
| | | n-BUCl | 20 | | | | |
| 6 | 0.50 | { Et$_2$AlCl | 12 } | 1-Hexane | 15 | 60 | 26,000 |
| | | Et$_{1.5}$AlCl$_{1.5}$ | 12 | | | | |
| 7 | 0.45 | { Et$_2$Alcl$_{1.5}$ | 12 } | 4-Octene | 8 | 70 | 28,900 |
| | | Et$_{1.5}$AlCl$_{1.5}$ | 12 | | | | |

TABLE 2

| Example (Ex.) or Comparative Example (CEx) | MFR (g/10 min) | Density (g/cm³) | Branches/ 1000C | U | Amount of components having a degree of branching of not more than 2/10³C (wt.%) | Amount of components having a degree of branching of at least 30/10³C (wt.%) | n-Decane-soluble content (wt.%) | Methylene chain length ratio | Highest melting point (T₁) (°C) | $T_1-T_n$ (°C) | $T_1-T_2$ (°C) | $H_1/H_T$ |
|---|---|---|---|---|---|---|---|---|---|---|---|---|
| Ex.1 | 1.95 | 0.923 | 10.2 | 10 | 1.2 | 5.4 | 0.14 | 1.10 | 120.2 | 11.2 | 3.2 | 0.10 |
| 2 | 2.21 | 0.920 | 9.1 | 6 | 0.5 | 3.2 | 0.10 | 1.05 | 119.5 | 9.3 | 2.7 | 0.06 |
| 3 | 2.03 | 0.921 | 10.9 | 10 | 0.9 | 5.8 | 0.23 | 1.12 | 120.5 | 11.5 | 3.1 | 0.09 |
| 4 | 1.98 | 0.922 | 11.3 | 25 | 2.3 | 8.1 | 0.38 | 1.21 | 122.0 | 14.4 | 3.8 | 0.13 |
| 5 | 2.15 | 0.915 | 14.0 | 18 | 0.8 | 9.8 | 1.35 | 1.26 | 121.2 | 15.3 | 3.8 | 0.07 |
| 6 | 2.45 | 0.913 | 15.2 | 18 | 0.5 | 10.5 | 1.42 | 1.26 | 120.8 | 15.4 | 3.7 | 0.06 |
| 7 | 2.12 | 0.931 | 8.3 | 17 | 4.5 | 2.0 | 0.15 | 1.11 | 121.3 | 10.0 | 3.5 | 0.33 |
| CEx. 1 | 1.94 | 0.922 | 13.2 | 55 | 7.8 | 13.2 | 3.1 | 1.67 | 123.2 | 19.2 | 4.5 | 0.25 |
| 2 | 2.10 | 0.920 | 15.5 | 108 | 9.2 | 14.5 | 3.2 | 1.80 | 124.4 | 19.4 | 3.2 | 0.28 |
| 3 | 1.87 | 0.926 | 18.7 | 280 | 23.5 | 6.8 | 2.1 | 2.83 | 124.5 | 0 | 0 | 1 |

TABLE 3

| Example (Ex.) or Comparative Example (CEx.) | Haze (%) | Impact strength (kg cm/cm) | Elemendorf tear strength | | Blocking value (g) | Heat seal starting temperature (°C) |
|---|---|---|---|---|---|---|
| | | | MD (Kg/cm) | TD (Kg/cm) | | |
| Ex. 1 | 8.7 | 4000 | 127 | 183 | 2.8 | 120 |
| Ex. 2 | 6.8 | 4300 | 135 | 181 | 2.1 | 120 |
| Ex. 3 | 8.9 | 4100 | 128 | 179 | 2.7 | 120 |
| Ex. 4 | 10.1 | 3900 | 123 | 175 | 3.4 | 125 |
| Ex. 5 | 6.8 | 5400 | 152 | 196 | 5.7 | 115 |
| Ex. 6 | 5.2 | 6200 | 168 | 196 | 5.6 | 115 |
| Ex. 7 | 9.2 | 2800 | 103 | 178 | 1.1 | 125 |
| CEx. 1 | 12.5 | 3300 | 110 | 176 | 6.7 | 130 |
| CEx. 2 | 16.7 | 3100 | 102 | 175 | 7.5 | 135 |
| CEx. 3 | 20.8 | 2200 | 87 | 167 | 6.9 | 140 |

**Claims**

1. An ethylene copolymer having in combination the following characteristics (A) to (I):
(A) it has a melt flow rate of from 0.01 to 200 g/10 min.;
(B) it has a density of from 0.900 to 0.945 $g/cm^3$;
(C) it has a composition distribution parameter (U), defined by the following equation (1)

$$U = 100 \times (Cw/Cn - 1) \qquad \qquad \dots \dots (1)$$

wherein Cw is the weight average degree of branching, and Cn is the number average degree of branching, of not more than 50;
(D) the amount of components having a degree of branching of not more than 2/1000 carbons is not more than 15% by weight based on the ethylene copolymer;
(E) the amount of components having a degree of branching of at least 30/1000 carbons is not more than 15% by weight based on the ethylene copolymer;
(F) the average chain length ratio of the methylene groups is not more than 2.0;
(G) it has $n$ melting points measured by a differential scanning calorimeter (DSC) (where n≥2); the highest melting point ($T_1$) among these DSC melting points is given by the following equation

$$T_1 = (175 \times d - 46)°C \sim 125°C$$

wherein d is the density ($g/cm^3$) of the copolymer;
the difference between $T_1$ and the lowest melting point ($T_n$) among the DSC melting point is given by

$$0°C < T_1 - T_n \leqq 18°C;$$

and the difference between $T_1$ and the second highest melting point $T_2$ is given by

$$0°C < T_1 - T_2 \leqq 5°C,$$

provided that when there are two (n=2) DSC melting points, the difference is in accordance with the above expression $0°C < T_1 - T_n \leqq 18°C;$

11

(H) the ratio of the amount of heat of crystal fusion ($H_1$) at the highest melting point ($T_1$) to the total amount of heat of crystal fusion ($H_T$) is given by

$$O < H_1/H_T \leqq 0.40; \text{ and}$$

(I) it is a copolymer of ethylene with at least one $C_4$—$C_{20}$ α-olefin.

2. An ethylene copolymer according to claim 1 which further has the following characteristic (J), (J) the copolymer has an n-decane-soluble content at 23°C of not more than 5% by weight.

3. An ethylene copolymer according to claim 1 or 2 wherein the highest melting point ($T_1$) is defined by

$$T_1 = (175 \times d - 43)°C \sim 125°C.$$

4. Shaped articles of an ethylene copolymer as claimed in claim 1, 2 or 3.

5. A process for producing a shaped article which comprises molding an ethylene copolymer as defined in claim 1, 2 or 3.

6. A process according to claim 5 wherein a film is produced by molding the ethylene copolymer by T-die molding or inflation film molding.

## Patentansprüche

1. Ethylencopolymer, das in Kombination die folgenden Merkmale (A) bis (I) aufweist:

(A) es besitzt ein Schmelzflußgeschwindigkeit (Schmelzindex) von 0.01 bis 200 g/10 min;

(B) es besitzt eine Dichte von 0,900 bis 0,945 g/cm³;

(C) es besitzt einen Parameter (U) der Verteilung der Zusammensetzung, angegeben durch die folgende Gleichung (1) $U = 100 \times (Cw/Cn - 1) \ldots (1)$, in der Cw das Gewichtsmittel des Verzweigungsgrades und Cn das Zahlenmittel des Verzweigungsgrades ist, von nicht mehr als 50;

(D) die Menge der Komponenten mit einem Verzweigunsgrad von nicht mehr als 2/1000 Kohlenstoffatome beträgt nicht mehr als 15 Gew.-%, bezogen auf das Ethylencopolymer;

(E) die Menge an Komponenten mit einem Verzweigungsgrad von mindestens 30/1000 Kohlenstoffatome beträgt nicht mehr als 15 Gew,-%, bezogen auf das Ethylencopolymer;

(F) die mittlere Kettenlänge der Methylengruppen ist nicht mehr als 2,0;

(G) es besitzt n Schmelzpunkte, gemessen durch ein Differential-Abtast-Kalorimeter (DSC) (wobei n $\geqq$ 2); wobei der höchste Schmelzpunkt ($T_1$) dieser DSC-Schmelzpunkte angegeben wird durch die folgende gleichung $T_1 = (175 \times d - 46)°C \sim 125°C$, in der d die Dichte (g/cm³) des Copolymers ist, wobei der Unterschied zwischen $T_1$ und dem niedrigsten Schmelzpunkt ($T_n$) von den DSC-Schmelzpunkten angegeben wird durch $0°C < T_1$—$T_n \leqq 18°C$ und der Unterschied zwischen $T_1$ und dem zweithöchsten Schmelzpunkt $T_2$ angegeben wird durch $0°C < T_1$—$T_2 \leqq 5°C$ mit der Maßgabe, daß wenn zwei (n=2) DSC-Schmelzpunkte vorliegen, der Unterschied in Übereinstimmung ist mit dem obigen Ausdruck $0°C < T_1$—$T_n \leqq 18°C$;

(H) das Verhältnis der Menge der Kristall-Schmelzwärme ($H_1$) beim höchsten Schmelzpunkt ($T_1$) zur Gesamtmenge der Kristall-Schmelzwärme ($H_T$) wird angegeben durch $0 < H_1/H_T \leqq 0,40$ und

(I) es ist ein Copolymer aus Ethylen mit mindestens einem $C_4$—$C_{20}$ α-Olefin.

2. Ethylencopolymer nach Anspruch 1, das ferner das folgende Merkmal (J) aufweist,

(J) nicht mehr als 5 Gew.-% des Copolymers sind bei 23°C in n-Decan löslich.

3. Ethylencopolymer nach Anspruch 1 oder 2, wobei der höchste Schmelzpunkt ($T_1$) definiert ist durch ($T_1 = (175 \times d - 43)°C \sim 125°C$.

4. Formkörper aus einem Ethylencopolymer wie in Anspruch 1, 2 oder 3 beansprucht.

5. Verfahren zur Herstellung eines Formkörpers, umfassend das Formen eines Ethylencopolymers wie in Anspruch 1, 2 oder 3 definiert.

6. Verfahren nach Anspruch 5, wobei ein Film (eine Folie) erzeugt wird, durch Formen des Ethylencopolymers mit Hilfe eines T-Spritzkopfes oder durch Blas-Formen.

## Revendications

1. Copolymère d'éthylène présentant conjointement les caractéristiques (A) à (I) ci-après:

(A) son débit d'écoulement à l'état fondu est compris entre 0,01 à 200 g/10 minutes;

(B) sa densité est comprise entre 0,900 à 0,945 g/cm³;

(C) il possède un paramètre (U) de distribution de composition, défini par l'équation suivante (1):

$$U = 100 \times (Cw/Cn - 1) \tag{1}$$

dans laquelle Cw est le degré moyen en poids de ramification et Cn est le degré moyen en nombre de ramification, non supérieur à 50;

12

(D) la quantité des composants ayant un degré de ramification ne dépassant pas 2/1000 atomes de carbone est de 15% en poids par rapport au copolymère d'éthylène;

(E) la quantité des composants ayant un degré de ramification d'au moins 30/1000 atomes de carbone n'est pas supérieure à 15% en poids par rapport au copolymère d'éthylène;

(F) le rapport moyen de longueur de chaînes des groupes méthylène n'est pas supérieur à 2,0;

(G) il possède $n$ points de fusion mesurés par un calorimètre à balayage différentiel (CBD) (où $n \geqq 2$). Le point de fusion le plus élevé ($T_1$) parmi ces points de fusion CBD est donné par l'équation suivante:

$$T = (175 \times d - 46)°C \sim 125°C$$

dans laquelle $d$ est la densité (g/cm³) du coplymère, et la différence entre $T_1$ et le point de fusion le plus bas ($T_n$) parmi les points du fusion CBD est donnée par

$$0°C < T_1{-}T_n \leqq 18°C$$

et la différence entre $T_1$ et le second point de fusion le plus élevé $T_2$ est donnée par

$$0°C < T_1{-}T_2 \leqq 5°C,$$

à la condition que quand il y a deux ($n = 2$) points de fusion CBD, la différence respecte l'expression ci-dessus:

$$0°C < T_1{-}T_n \leqq 18°C;$$

(H) le rapport de la quantité de chaleur de fusion cristalline ($H_1$) au point de fusion ($T_1$) à la quantité totale de chaleur de fusion cristalline ($H_T$) est donné par:

$$O < H_1/H_T \leqq 0,40;$$

(I) c'est un copolymère d'éthylène avec au moins une α-oléfine en $C_{4-20}$.

2. Copolymère d'éthylène selon la revendication 1, qui possède en outre la caractéristique (J) ci-après:

(J) le copolymère présente une teneur non supérieure à 5% en poids en matière soluble dans le n-décane à 23°C.

3. Copolymère d'éthylène selon la revendication 1 ou 2, dans lequel le plus haut point de fusion ($T_1$) est défini par:

$$T_1 = (175 \times d - 43)°C \text{ env } 125°C.$$

4. Articles façonnés en un copolymère d'éthylène selon l'une quelconque des revendications 1, 2 ou 3.

5. Procédé de production d'un article façonné, qui comprend la moulage d'un copolymère d'éthylène tel que défini dans la revendication 1, 2 ou 3.

6. Procédé selon la revendication 5, dans lequel on produit un film en moulant le copolymère d'éthylène par moulage à l'aide d'une filière en T, ou par moulage de film par boursouflage.

## Fig. 1

## Fig. 2